# EUROPEAN PATENT APPLICATION

(11) **EP 4 760 872 A1**
(43) Date of publication of application: **17.06.2026**
(21) Application number: 25215391.1
(22) Date of filing: 12.11.2025
(51) Int. Cl.: H01M 10/613, H01M 10/6557, H01M 50/591, H01M 10/647

(54) **AN ELECTRIC BATTERY UNIT HAVING AN IMMERSION THERMAL MANAGEMENT SYSTEM WITH OPTIMIZED FLOW PATHS FOR A TEMPERATURE-REGULATING LIQUID**

(30) Priority: 12.12.2024 IT 202400028314
(71) Applicant: C.R.F. Società Consortile per Azioni, 10043 Orbassano (Torino) (IT)
(72) Inventor: Ricco, Raffaele, 10043 Orbassano (Torino) (IT); De Michele, Onofrio, 10043 Orbassano (Torino) (IT); Mazzarella, Carlo, 10043 Orbassano (Torino) (IT); Rossi, Dario, 10043 Orbassano (Torino) (IT)
(74) Representative: Buzzi, Notaro & Antonielli d'Oulx S.p.A.

(57) **Abstract**

An electric battery unit (1) comprises a container (2) and a plurality of battery cells within the container (4) spaced apart from each other by one or more spacer frames (11) such as to define spaces (7) between the cells (2). The battery cells (2) come into direct contact with a flow of a temperature-regulating liquid that passes through the container (4) from an inlet collector chamber (5) below, or above, the battery cells (2), through the spaces (7) between the battery cells (2), up to an outlet collector chamber (6) above, or respectively below, the battery cells (2). The inlet collector chamber (5) communicates with the spaces (7) between the battery cells via a plurality of relatively restricted passages (9), configured to offer the flow of the temperature-regulating liquid a sufficient resistance to prevent the temperature-regulating liquid from tending to flow to a greater extent in the spaces that are closer to an inlet and/or an outlet for the temperature-regulating liquid. The spacer frames (11) define a plurality of parallel paths (13) in each of the spaces (7) between the cells (2) configured so as to further uniform the temperature of each cell along the vertical direction.

## Description

### Field of the invention

The present invention relates to an electric battery unit, for example a battery pack or a single battery module contained within a battery pack, of the type comprising:
- a container,
- a plurality of battery cells within the container,
- wherein the battery cells are spaced apart from each other by one or more spacer frames such as to define spaces between the cells,
- wherein the battery cells are configured and arranged to be in direct contact with a flow of a temperature-regulating liquid that passes through the container for maintaining the battery cells within a predetermined temperature range,
- wherein the container is configured such that the temperature-regulating liquid flows from an inlet collector chamber, which extends below, or above, the battery cells, through the spaces between the battery cells and up to an outlet collector chamber which extends above, or respectively below, the battery cells,
- wherein the inlet collector chamber communicates with the spaces between the battery cells via a plurality of relatively restricted passages, configured to offer the flow of the temperature-regulating liquid a sufficient resistance to prevent the temperature-regulating liquid from tending to flow to a greater extent in the spaces that are closer to an inlet and/or an outlet for the temperature-regulating liquid

The invention relates in particular to electric battery units of the type indicated above which are used to power electric traction motors in electric or hybrid vehicles.

In the present description, the terms "upper" and "lower", as well as terms such as "vertical" and "horizontal" or "height", are used with reference to the condition in which an electric battery unit is arranged and mounted in a vehicle.

### Background of the invention

Electric battery units having the characteristics indicated above are known and have been used for some time.

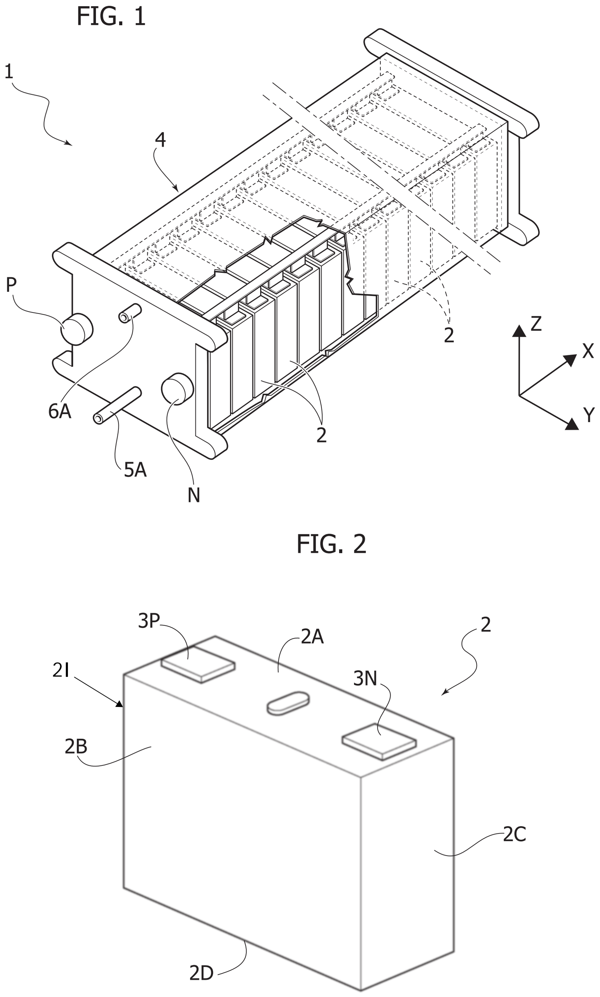

Figures 1-4 of the attached drawings relate to a single battery module of a known type, including a single group of cells. A battery pack may generally comprise a plurality of such battery modules, each provided with a respective container and arranged within a common external container. The invention is, however, also applicable to battery packs, wherein a plurality of battery cells is arranged within a common container.
Figure 1 is a schematic perspective view of a module 1 forming part of a battery pack. The module 1 includes a plurality of prismatic cells 2, arranged aligned along a direction X inside a container 4. However, the invention is also applicable to battery cells of the "pouch" type, per se known.
Figure 2 is an enlarged scale perspective view of a prismatic battery cell 2, comprising a housing having an upper surface 2A, two opposite main surfaces 2B, which inside the container 4 are arranged orthogonal to the direction X of alignment of the cells, two side walls 2C and a lower wall 2D. In the example illustrated in figure 2, the positive pole 3P and the negative pole 3N of the battery cell 2 protrude from the upper wall 2A. However, it is also possible for the two poles 3P, 3N, to be arranged on one of the side faces 2C of the cell 2. According to a per se known technique, all the positive poles 3P and all the negative poles 3N of the cells 2 are electrically connected to each other and to two respective poles P and N protruding, in the illustrated example, from an end wall of the container 4, as illustrated in figure 1.

The battery cells 2 inside the container 4 of the module 1 are immersed in a flow of a temperature-regulating liquid (typically a dielectric oil) that passes through the internal space of the container 4.

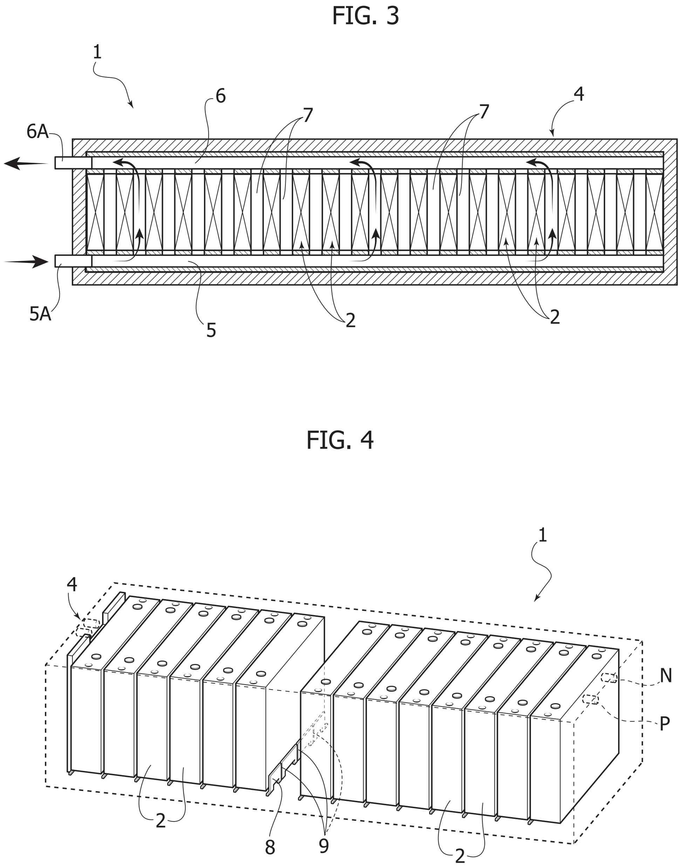

Figure 3 is a schematic sectional view of the battery module 1 illustrated in figure 1. In particular, the module is sectioned along a plane identified by the directions X-Z, defined in figure 1, and passing through the center of the battery cells 2. The container 4 includes an inlet opening 5A for the temperature-regulating liquid, communicating with an inlet collector chamber 5 arranged below, or above, the battery cells 2. The container 4 further comprises an outlet opening 6A for the temperature-regulating liquid, communicating with an outlet collector chamber 6, arranged above, or respectively below, the array of battery cells 2. Again with reference to figure 3, the battery cells 2 are arranged spaced apart from each other so as to define a plurality of spaces 7 between the cells 2, which place the inlet collector chamber 5 in hydraulic communication with the outlet collector chamber 6. In general, this is achieved by interposing spacer frames 11 between the cells. The assembly of the cells 2 and the spacer frames 11 is maintained in an assembled condition by applying a compression force along the longitudinal direction X (figure 1) by means of any known type, for example by means of tie-rods (not illustrated). The size of the spaces 7 interposed between the cells 2 has been exaggerated for clarity in figure 3. In reality, the distance between two adjacent cells 2 can be for example on the order of a few millimeters (for example, about 2 mm).

Figure 4 is a partially sectioned perspective view of a battery module of the known type described above, in which one of the cells 2 has been removed to illustrate a portion of a spacer frame 11, comprising a lower horizontal element 8, which extends along the lower edge of a cell 2, for the entire width of the cell 2 (i.e., in the direction Y of figure 1).

Each element 8 has multiple passages 9 that place the inlet collector chamber 5 in communication with the respective space 7 between two cells 2. The passages 9 are relatively restricted, such as to offer a resistance to the flow of the temperature-regulating liquid sufficiently high to prevent the temperature-regulating liquid from tending to flow more in the spaces between the cells that are closer to the inlet 5A (figure 3) and/or to the outlet 6A. In this way, in the aforementioned known solutions, an attempt is made to uniform the flow of the temperature-regulating liquid between the different spaces between the cells.

In general, the temperature-regulating liquid supply system may include a pump to activate the circulation of the liquid and one or more heat exchangers to maintain the temperature-regulating liquid at a desired temperature. The temperature-regulating liquid (for example a dielectric oil) can perform both a cooling function, when the temperature of the battery module tends to exceed a predetermined maximum threshold value, and a heating function, when the temperature of the battery module tends to fall below a predetermined minimum threshold value. The temperature-regulating liquid supply system is preferably electronically controlled based on signals emitted by one or more sensors arranged in the battery module. Again, all the aforementioned details are not illustrated here, both because they can be implemented in any known way, and because they do not fall, taken by themselves, within the scope of the invention, and also because their elimination from the drawings makes the latter simpler and easier to understand.

In particular, the Applicant has already proposed various solutions in the field of thermal management systems for electric battery packs. See for example the Italian patent applications 102023000022692, 102023000022698, 102023000022704, 102023000025884, 102024000002776, 102024000002779, 102024000004423, 102024000007807, 102024000007813, 102024000007816, 102024000007828, 102024000013039, 102024000013492, 102024000014308, 102024000014314, 102024000014326, 102024000015637, 102024000016354, 102024000016933, 102024000020863, 102024000020875, 102024000021069, 102024000021546, 102024000022857, 102024000025689 and 102024000027153, all still not available to the public as of the date of the present invention.

Studies and experiences of the Applicant have shown that in solutions of the type indicated above, a series of problems arise.

Firstly, the greater the number of cells, the greater can be the nonuniformity of the flow rate of the temperature-regulating liquid in the different spaces between the cells, which generates a different heat removal and therefore a non-homogeneous battery temperature, which reduces the life of the cells and increases the risk of "thermal runaway".

Furthermore, if the distribution of the flow lines of the temperature-regulating liquid in each single space between the cells is not uniform, a temperature gradient is created on the surface of each cell in the direction of the cell's width.

An additional problem of the thermal management of battery cells concerns a temperature gradient in the vertical direction, inside each cell, induced by the fact that the fluid does not have a constant temperature while moving vertically inside each space between two cells. In particular, if the temperature-regulating liquid is supplied from a lower collector and moves vertically upwards, it induces a temperature gradient on the cells along the vertical direction, with lower temperatures near the lower collector, and higher temperatures at the top of the cells, in the case of cooling of the cell by the temperature-regulating liquid, or vice versa in the case of heating. This issue is due to the fact that the temperature-regulating capacity of the liquid is maximum at the inlet collector chamber and gradually decreases as it approaches the outlet collector chamber.

An additional problem of the thermal management of battery cells concerns a deformation of the cells themselves known as "swelling". It is a permanent and cumulative swelling due to the chemical dynamics and aging of the cell which is favored, among other aspects, by high temperatures. It is a phenomenon that reduces the useful life of the battery cells and increases the probability of malfunctions due to thermal fluctuations that can lead to "thermal runaway". Furthermore, the deformation causes a reduction of the space traversed by the liquid, an internal stress and, in the worst case, a short circuit between two adjacent cells or inside the battery.

An additional problem arises from the fact that the cells must rest on supports, which mask portions of the cell surfaces, preventing uniform thermal management.

The charging speed proves to be an additional problem related to the thermal management of battery cells. In fact, as the speed at which power is supplied to the battery cells increases, the power dissipated due to the Joule effect also increases, with a consequent increase in the cell temperature up to a maximum allowable temperature Tₘₐₓ. Under this condition, the power delivered to the battery is greatly reduced, so that the temperature, also due to the effect of the thermal management system, does not exceed the predetermined Tₘₐₓ. Consequently, this process significantly lengthens the charging times of electric battery packs.

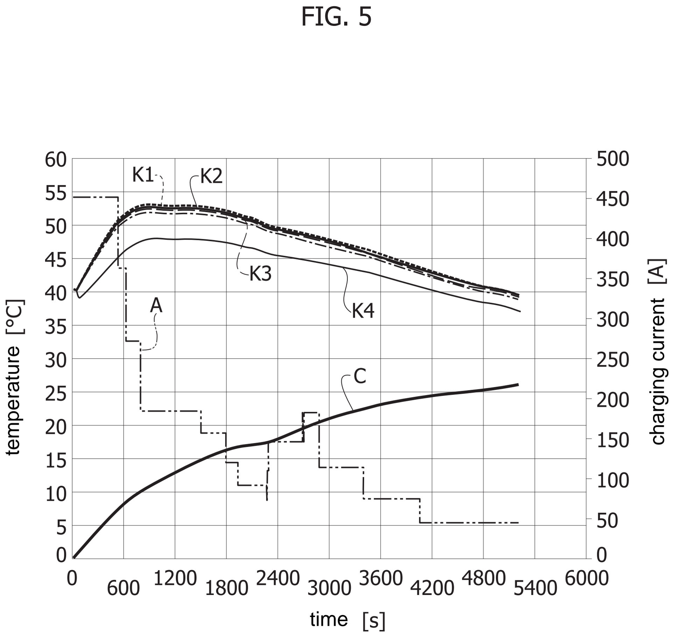

The aforementioned phenomenon is illustrated in the diagram of figure 5. In this diagram, line C shows the state of charge of a battery cell, measured in ampere-hours (Ah) during a charging phase of the battery pack. As can be seen, the state of charge increases constantly, but with different slopes of the curve. From 0 to about 700 seconds, it can be noted that curve C has a steep slope, which actually corresponds to a fast charge. After 700 seconds, curve C begins to have an asymptotic profile which corresponds to a decrease in the charging speed

Lines K1, K2, K3, K4 show the temperature variation during the recharging of the battery pack in different areas of a face of a cell (respectively on one side, at the center, on the opposite side and in the lower part of the cell face). Curves K1, K2, K3 are substantially coincident, while curve K4 is similar to the others, but shifted towards lower temperatures, as it relates to the lower part of the cell, which is better cooled by the temperature-regulating liquid coming from below. In particular, the hottest region of the cell turns out to be just above the centroid of the cell, which therefore requires greater cooling: this is all the more true the greater the thickness of the cell itself.

Line A shows the variation of the electric current supplied during recharging. As can be observed, as soon as the battery cell reaches a temperature around 50° C at some of its points (lines K1, K2, K3), the supply electric current is drastically reduced. This means that in practice the fast charging process actually lasts less than 700 seconds, after which it is no longer possible to charge with a high current, to avoid overheating the cells beyond the predefined limit. The non-homogeneity of the heat removal by the cooling liquid significantly reduces the potential time interval for fast charging.

Finally, a last problem of thermal management of battery cells is related to the heating of the battery pack, for example during activation at temperatures lower than -10° C. In this case, the thermal management system provides heat to the battery pack to raise the temperature and bring it within the operating range. However, in these phases the flow rate of the hot fluid is high, consequently the minimum passage sections in the spaces between the cells must be sufficient to handle it

There is therefore a need for further improvements in this field.

### Object of the invention

It is therefore an object of the present invention to produce an electric battery unit, of the type indicated at the beginning of the present description, capable of solving the aforementioned technical problems.

In particular, an object of the present invention is to maintain the temperature of the cells within a battery module within a determined range under any operating condition, thanks to a high efficiency of heat exchange with the temperature-regulating liquid. Specifically, the invention aims to solve the problem of maintaining a substantial uniformity of the temperature of the different cells and of the different areas of the surface of each cell, thanks to a substantially homogeneous and constant flow of the temperature-regulating liquid between the different cells.

Even more particularly, an object of the invention is to achieve a greater uniformity of the temperature of each battery cell along the vertical direction, compared to what is achievable with the solutions of the prior art.

A further object of the present invention is to provide the electric battery unit with a system capable of limiting the phenomenon of "swelling".

A further object is to provide the electric battery unit with a system capable of ensuring that the spaces between the cells remain substantially unchanged throughout operation.

Finally, a last object is to achieve the aforementioned objectives with simple and low-cost means.

### Summary of the invention

With a view to achieving one or more of the aforementioned objects, the invention has as its subject an electric battery unit of the type indicated at the beginning of the present description and further characterized in that the spacer frames define a plurality of parallel paths in each of the spaces between the cells configured to convey the temperature-regulating liquid from the inlet collector chamber to the outlet collector chamber.

In particular, the plurality of flow paths comprises at least one first-type path with a cross-section such that the temperature-regulating liquid flows from the inlet collector chamber up to the outlet collector chamber at a first average velocity, and at least one second-type path with a cross-section such that the temperature-regulating liquid flows from the inlet collector chamber up to an intermediate level along the height of the cell at a second average velocity. Furthermore, from said intermediate level to the outlet collector chamber, the temperature-regulating liquid flows at a third average velocity. Specifically, the second average velocity is substantially greater than both the first average velocity and the third average velocity.

The second-type paths are substantially configured to ensure that a certain flow rate of liquid coming from the inlet collector chamber can bypass the most adjacent portion of the cell, avoiding undergoing a temperature increase. In other words, the aim is to avoid heating of the liquid along the first section of the path of the second type. This is achieved by increasing the velocity of the liquid, so as to avoid giving it time to receive heat from the cell. The principle by which this objective is achieved is to create a very restricted passage, characterized precisely by a high velocity.

Said restricted passages can be arranged each upstream, or downstream, of a respective passage of the first type or of the second type.

Furthermore, in an example, in the paths of the second type, at the substantially intermediate level, each spacer frame defines a deflection device suitable for causing the flow of temperature-regulating liquid to travel along a tortuous trajectory, so as to ensure a longer residence time in the upper half of the cell.

Furthermore, in a preferred embodiment, the spacer frames are configured so as to form a peripheral frame, having an upper lath, a lower lath, two side laths and further internal laths. Furthermore, the laths have portions of greater thickness, in contact with the faces of two adjacent cells, so as to define the space between the cells, and portions of lesser thickness, which allow the flow of the temperature-regulating liquid in the space between the cells. In particular, the portions of greater thickness are configured and arranged so as to define said first-type paths and of the second type.

In a preferred embodiment, there is only one path of the second type, and said second-type path is arranged centrally in the space between two adjacent cells and on each side of said space a plurality of flow first-type paths is provided. However, any number of first-type paths and any number of second-type paths can be provided.

One embodiment provides that the battery cells are of the prismatic type and comprise a housing comprising two main walls, an upper wall, a lower wall and two end walls. However, this is not a necessity and indeed it is possible to provide a further embodiment that provides for the use of battery cells of the *pouch* type. In this case the spacer frames would also serve as support elements for the cells themselves.

Thanks to the aforementioned characteristics, the invention solves in a simple and efficient manner all the problems that have been exposed above. In particular, the temperature-regulating liquid is distributed according to different paths in each space between the battery cells, so as to further uniform the cooling/heating efficiency along the vertical direction of each cell.

### Brief description of the figures

Further characteristics and advantages of the invention will result from the following description with reference to the attached drawings, provided by way of non-limiting example only, in which:
- figure 1 is a perspective view of a battery module according to the prior art,
- figure 2 is a perspective view of a prismatic battery cell,
- figure 3 is a schematic sectional view of the battery module of figure 1,
- figure 4 is a schematic perspective view of an array of battery cells in a battery module according to the prior art,
- figure 5 is a diagram illustrating the temperature variation of the battery cells during a charging phase, in the case of the previously proposed systems, and
- figure 6 is a schematic sectional view illustrating the space between the cells and, in particular, the arrangement of the spacer frames in an embodiment according to the invention, and
- figure 7 is a schematic perspective and sectional view of the space between the cells and of the arrangement of the spacer frames also illustrated in figure 6.

### Detailed description of the invention

Figures 1-5 have already been described previously.

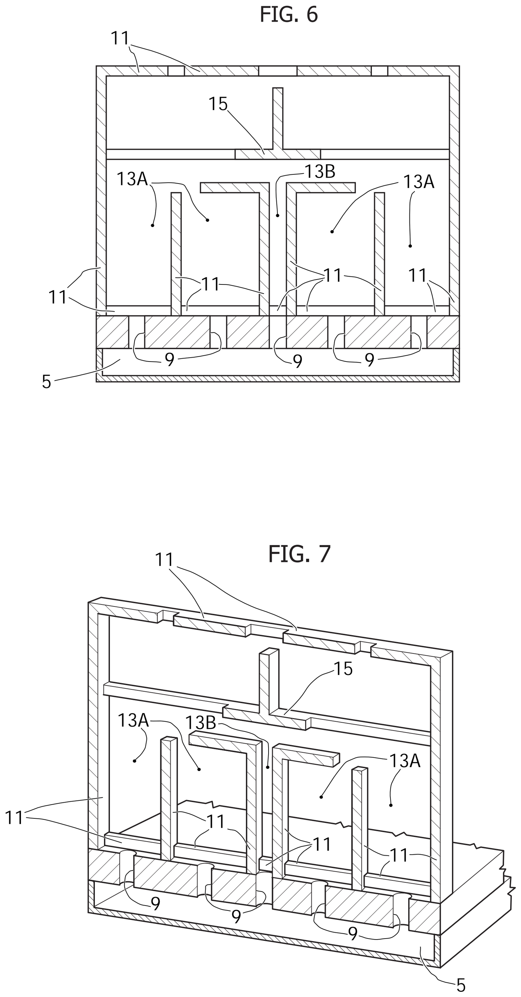

Figures 6 and 7 illustrate a possible embodiment according to the invention. In particular, figure 6 shows a partial and sectioned view made at a space 7 between the cells 2 of the electric battery unit 1 which is the subject of the invention and visible in figure 1. Specifically, it is possible to note the coupling between the inlet collector chamber 5, the plurality of relatively restricted passages 9 and the spacer frames 11 which define the plurality of flow paths 13 for the temperature-regulating liquid inside the space 7 between the cells 2. In particular, the inlet collector chamber 5 accumulates the temperature-regulating liquid which flows through the plurality of relatively restricted passages 9 configured to regulate the flow so as to distribute it equally in all the spaces 7 between the cells 2 and, at the same time, so as to distribute it uniformly within the same space 7 between the cells 2.

In addition, the spacer frames 11 are configured to convey the temperature-regulating liquid from the inlet collector chamber 5 to the outlet collector chamber 6 (not present in figures 6 and 7) according to first-type paths 13A and second-type paths 13B. Notably the second-type path 13B, up to an intermediate level along the height of the cell 2, has a cross-section that is relatively restricted compared to the first-type paths 13A. The relatively reduced section enables the temperature-regulating liquid to flow inside the second-type path 13B at an average velocity substantially higher than the average velocities typical of the other zones of the space 7 between the cells 2. In this way, the liquid flows rapidly up to the intermediate level of the cell 2 without heating excessively, or cooling in the case of heating of the electric battery unit 1, and consequently without losing its temperature-regulating capacity. Upon reaching the intermediate level, the temperature-regulating liquid slows down in response to an increase in the cross-section and, due to the presence of the deflection device 15 (made by one or more suitably arranged spacer frames 11), is deflected so as to acquire a velocity component along the direction Y, defined in figure 1. Consequently, the fraction of temperature-regulating liquid in question is characterized by a greater ability to remove heat exactly at the region of the cell that is otherwise the hottest: it is thus possible to homogenize the temperature of the cell. In figures 6 and 7 a solution is shown that provides a deflection device 15 placed horizontally, however this is not a necessity. In fact, it could assume different configurations suitable to obtain the same effect.

On the other hand, the first-type paths 13A develop substantially parallel to the first section of the second-type path 13B just described. In particular, the first-type paths 13A have passage sections substantially larger than the second-type path 13B and this is reflected in lower average velocities. Consequently, the temperature-regulating liquid remains in the zone between the inlet collector chamber 5 and the intermediate level of the cell for a sufficiently long time to allow adequate thermal regulation of the battery cell 2.

By adequately configuring the relatively restricted passages 9 it is possible to optimize the distribution of the flow rate of temperature-regulating liquid to be made to flow to the first-type paths 13A and the flow rate to be made to flow directly to the intermediate level of the cell 2 by means of the second-type paths 13B, so as to uniform the temperature over the entire cell 2 and avoid the temperature gradients that damage and limit the life of the same.

In figure 7 it is possible to observe the distribution of the thicknesses of the spacer frames 11 in the direction orthogonal to the faces of the cells between which they are interposed. In particular, the frames with greater thickness define the spaces 7 between the cells 2 and allow to define the plurality of flow paths 13 that the temperature-regulating liquid must travel. Furthermore, the frames with greater thickness simultaneously play a structural role, in fact, they limit the deformation of the cells 2 along the direction X, defined in figure 1, and guarantee the minimum passage sections necessary for the temperature-regulating fluid. In addition, it is observed that there are frames with reduced thickness, which allow the fluid to flow from the inlet collector chamber 5 to the outlet collector chamber 6 and also allow to stabilize the frames with greater thickness that are within the frame of the spacer frames 11.

In the case where the invention is applied to prismatic cells, the cells can be arranged with the positive and negative poles on the upper wall 2A, or on the vertical end wall 2C.

Naturally, the principle of the invention remaining firm, the details of construction and the embodiments may vary widely with respect to what has been described and illustrated by way of example only, without thereby departing from the scope of the present invention, as defined in the attached claims.

## Claims

1. An electric battery unit (1), comprising:
- a container (4),
- a plurality of battery cells (2) within the container (4),
- wherein the battery cells (2) are spaced apart from each other by one or more spacer frames (11) such as to define spaces (7) between the cells (2),
- wherein the battery cells (2) are configured and arranged to come into direct contact with a flow of a temperature-regulating liquid that passes through the container (4) for maintaining the battery cells (2) within a predetermined temperature range,
- wherein the container (4) is configured such that the temperature-regulating liquid flows from an inlet collector chamber (5), which extends below, or above, the battery cells (2), through the spaces (7) between the battery cells (2) and up to an outlet collector chamber (6) which extends above, or respectively below, the battery cells (2),
- wherein the inlet collector chamber (5) communicates with the spaces (7) between the battery cells (2) via a plurality of relatively restricted passages (9), configured to offer the flow of the temperature-regulating liquid a sufficient resistance to prevent the temperature-regulating liquid from tending to flow to a greater extent in the spaces (7) that are closer to an inlet and/or an outlet for the temperature-regulating liquid,
said electric battery unit (1) being **characterized in that**:
- said one or more spacer frames (11) define a plurality of parallel paths (13) in each of the spaces (7) between the cells (2) configured to convey the temperature-regulating liquid from the inlet collector chamber (5) to the outlet collector chamber (6),
- said plurality of flow paths (13) comprises at least one first-type path (13A) with a cross-section such that the temperature-regulating liquid flows from the inlet collector chamber (5) up to the outlet collector chamber (6) at a first average velocity, and at least one second-type path (13B) with a cross-section such that the temperature-regulating liquid flows from the inlet collector chamber (5) up to an intermediate level along the height of the cell (2) at a second average velocity, and from said intermediate level to the outlet collector chamber (6) at a third average velocity,
- wherein said second average velocity is substantially greater than said first average velocity and said third average velocity.

2. The electric battery unit (1) according to claim 1, **characterized in that**, along said second-type path (13B), at said substantially intermediate level, each spacer frame (11) defines a deflection device (15) suitable for causing the flow of temperature-regulating liquid to travel along a tortuous trajectory.

3. The electric battery unit (1) according to claim 1, **characterized in that** said second-type path (13B) is arranged centrally in the space between two adjacent cells, and that on each side of said space a plurality of first-type flow paths (13A) is provided.

4. The electric battery unit (1) according to claim 1, **characterized in that**:
- each spacer frame (11) is configured in the form of a peripheral frame, having an upper lath, a lower lath, two side laths and further internal laths,
- said laths have portions of greater thickness which are in contact with the faces of two adjacent cells, so as to define the space between the cells (2), and portions of lesser thickness, which allow the flow of the temperature-regulating liquid in the space (7) between the cells (2), and
- said portions of greater thickness being configured and arranged so as to define said first-type paths (13A) and second-type paths (13B).

5. The electric battery unit (1) according to claim 1, **characterized in that** said battery cells (2) are of the prismatic type and comprise a housing (2I) comprising two main walls (2B), an upper wall (2A), a lower wall (2D) and two end walls (2C).

6. The electric battery unit (1) according to claim 1, **characterized in that** said battery cells (2) are of the "pouch" type and said one or more spacer frames (11) serve as structural elements.

7. The electric battery unit (1) according to claim 1, **characterized in that** each of said restricted passages (9) is arranged either upstream or downstream of a respective first-type path (13A) or a second-type path (13B).
